# EUROPEAN PATENT APPLICATION

(11) **EP 4 807 503 A1**
(43) Date of publication of application: **16.09.2026**
(21) Application number: 25855412.0
(22) Date of filing: 24.01.2025
(51) Int. Cl.: G06F 3/01, G02F 1/1333, H02N 2/02

(54) **HAPTIC ACTUATOR**

(71) Applicant: LG ELECTRONICS INC., Yeongdeungpo-gu Seoul 07336 (KR)
(72) Inventor: MOON, Saseong, Seoul 06772 (KR); BAE, Hyejin, Seoul 06772 (KR)
(74) Representative: Vossius & Partner Patentanwälte Rechtsanwälte mbB
(86) International application number: PCT/KR2025/001465
(87) International publication number: WO 2026/160514

(57) **Abstract**

A haptic actuator according to various embodiments of the present disclosure may amplify vibration generated by driving a piezoelectric element and transmit the same to a cover glass covering a display panel through an amplification member including a head to which the piezoelectric element is attached, a first support having a width less than a width of the head and erected at a center portion of the head, and a second support having a width greater than the width of the first support, the second support being attached to the rear surface of the cover glass, wherein the first support may be erected at a center portion of the second support.

## Description

### TECHNICAL FIELD

The present disclosure relates to a haptic actuator having an amplification member that amplifies vibration generated by driving a piezoelectric element and transmits the amplified vibration to a cover glass covering a display panel.

### BACKGROUND

As computer-based systems have advanced, ease of interface between humans and machines has become increasingly important. The interface between humans and machines must be intuitive and easy for anyone to use. Among interface devices, a touch screen or touch pad is the most intuitive and easiest to use.

A touch screen consists of a panel capable of tactile sensing and a display device. In general, the touch screen allows the position and functions of a pointer on the touch screen to be controlled by directly touching the screen from the outside.

In order to provide haptic feedback to a touch screen, the development of haptic feedback generating devices has been actively conducted. Here, "haptic" refers to tactile sensations that can be felt at the fingertips when touching an object, and is a concept encompassing tactile feedback felt when the skin touches the surface of an object, and kinesthetic force feedback felt when the movement of joints and muscles is impeded.

In particular, vibration effects, or vibrational tactile haptic effects, can be useful for alerting users to specific events or providing realistic feedback to create greater sensory immersion in a simulated or virtual environment.

A member applied to haptic technology for providing haptic feedback to users is a piezoelectric element. A piezoelectric element is a device that exhibits the piezoelectric effect, in which voltage is generated when mechanical deformation is applied externally, or vibration is generated as the element expands or contracts when voltage is applied thereto.

However, the piezoelectric element has limitations on the vibration it can generate depending on factors such as the material of the element, the shape of the element, or the magnitude of the voltage applied thereto, and therefore there is a need for a means to efficiently generate greater vibration.

### DISCLOSURE

### Technical Problem

The present disclosure relates to a haptic actuator, and more specifically, an object of the present disclosure is to provide a haptic actuator including an amplification member that amplifies vibration generated by driving a piezoelectric element and transmits the amplified vibration to a cover glass covering a display panel.

Another object of the present disclosure is to provide a haptic actuator capable of both amplifying vibration transmitted to the rear surface of the cover glass in a vertical direction through an amplification member, and stably arranging the amplification member.

Technical tasks obtainable from the present disclosure are non-limited by the above-mentioned technical tasks. And, other unmentioned technical tasks can be clearly understood from the following description by those having ordinary skill in the technical field to which the present disclosure pertains.

### Technical Solution

A haptic actuator disposed on a rear surface of a cover glass covering a display panel may include a piezoelectric element driven to generate vibration, and an amplification member having a rear surface allowing the piezoelectric element to be attached thereto, the amplification member being arranged to amplify the vibration generated by driving the piezoelectric element and transmit the amplified vibration to the cover glass. The amplification member may include a head, the piezoelectric element being attached to the head, a first support having a width less than a width of the head and erected at a center portion of the head, and a second support having a width greater than the width of the first support, the second support being attached to the rear surface of the cover glass, wherein the first support may be erected at a center portion of the second support.

The width of the first support may be less than or equal to half a wavelength of the vibration generated by the piezoelectric element.

The piezoelectric element may have a width equal to the width of the head, wherein the width of the first support may be greater than or equal to one-tenth of the width of the piezoelectric element.

The width of the head may be less than or equal to a perpendicular distance between an edge of the display panel and an edge of the cover glass.

The width of the second support may be less than the width of the head.

Each of the head, the first support, and the second support may have a thicknesses greater than or equal to 0.5 millimeters and less than or equal to half a wavelength of the vibration generated by the piezoelectric element.

The thickness of the second support may be less than the thickness of the head or the first support.

The amplification member may be formed to extend in a longitudinal direction, wherein the amplification member may include a plurality of amplification members spaced apart from the display panel and attached to an edge portion of the rear surface of the cover glass.

The piezoelectric element may include a plurality of piezoelectric elements spaced apart from one another and attached to the head.

The amplification member may include a metallic material or a plastic material.

The haptic actuator may further include an adhesive member arranged to attach the piezoelectric element to the head and to attach the second support to the rear surface of the cover glass.

The display panel may include a flexible display panel. The cover glass may be bent to have a predetermined radius of curvature, and the second support may be bent to have a radius of curvature equal to the radius of curvature of the cover glass.

The display panel may include a liquid crystal display (LCD) panel.

### Advantageous Effects

A haptic actuator according to the present disclosure may include an amplification member configured to amplify vibration generated by driving a piezoelectric element and transmit the amplified vibration to a cover glass covering a display panel.

In addition, vibration transmitted to the rear surface of the cover glass in a vertical direction may be amplified through the amplification member, while the amplification member may be stably disposed on the cover glass.

Additional scope of applicability of the present disclosure will become apparent from the detailed description below. However, since various changes and modifications within the idea and scope of the present disclosure may be clearly understood by those skilled in the art, the detailed descriptions, and specific embodiments such as preferred embodiments of the present disclosure should be understood as being set forth only by way of example.

### BRIEF DESCRIPTION OF THE DRAWINGS

FIG. 1 is a block diagram illustrating the respective components of a display device.
FIG. 2 is a view illustrating a haptic actuator disposed on a rear surface of a cover glass according to an embodiment of the present disclosure.
FIG. 3 is a cross-sectional view taken along line A-A of FIG. 2.
FIG. 4 is an exploded view of the haptic actuator according to an embodiment of the present disclosure.
FIG. 5 is a perspective view of the haptic actuator according to an embodiment of the present disclosure.
FIG. 6 depicts the effects of the haptic actuator according to an embodiment of the present disclosure.

### BEST MODE

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical idea disclosed in the present specification. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

The display device described in the present disclosure may be, for example, an intelligent display device configured by adding computer support functions to a broadcasting reception function. While faithfully performing the broadcasting reception function, it may additionally have Internet functions and the like, providing a more convenient interface for a manual input device, touch screen, or spatial remote control. Furthermore, as wired or wireless Internet functions are supported, the display device may connect to the Internet and computers to perform functions such as email, web browsing, banking, or gaming. A standardized general-purpose OS may be used to support these various functions.

Therefore, the display device described in the present disclosure allows various applications to be freely added or deleted on, for example, a general-purpose OS kernel, such that a variety of user-friendly functions may be performed. More specifically, the display device may be, for example, a network TV, an HBBTV, or a smart TV. In some cases, it may also be applied to a smartphone.

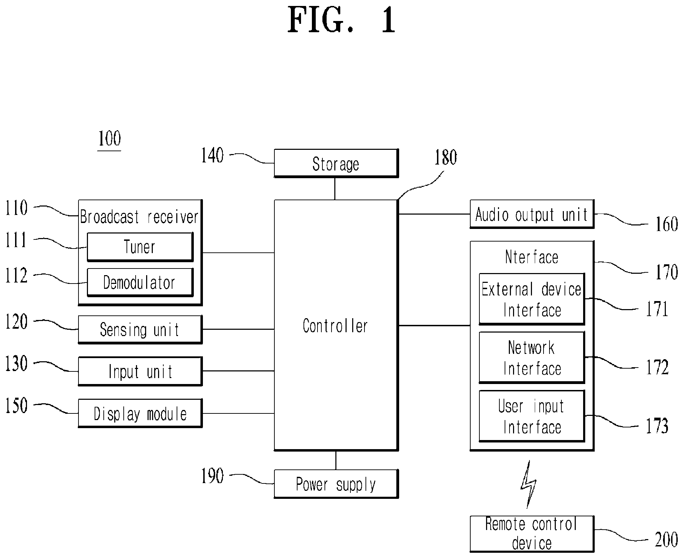

FIG. 1 is a block diagram illustrating the respective components of a display device 100. The display device 100 may include a broadcast receiver 110, an external device interface 171, a network interface 172, a storage 140, a user input interface 173, an input unit 130, a controller 180, a display module 150, an audio output unit 160, and/or a power supply 190.

The broadcast receiver 110 may include a tuner 111 and a demodulator 112.

Unlike the illustration of the figure, the display device 100 may have only the external device interface 171 and the network interface 172 among the broadcast receiver 110, the external device interface 171, and the network interface 172. That is, the display device 100 may not include the broadcast receiver 110.

The tuner 111 may select a broadcast signal corresponding to a channel selected by a user or corresponding to all pre-stored channels among the broadcast signals received through an antenna (not shown) or a cable (not shown). The tuner 111 may convert the selected broadcast signal into an intermediate frequency signal or a baseband image or audio signal.

For example, when the selected broadcast signal is a digital broadcast signal, the tuner 111 may convert the signal into a digital IF signal (DIF). When the selected broadcast signal is an analog broadcast signal, the tuner may convert the signal into an analog baseband image or audio signal (CVBS/SIF). That is, the tuner 111 may process a digital broadcast signal or an analog broadcast signal. The analog baseband image or audio signal (CVBS/SIF) output from the tuner 111 may be directly input to the controller 180.

The tuner 111 may sequentially select broadcast signals of all stored broadcast channels from among the received broadcast signals through a channel memory function and convert the selected signals into intermediate frequency signals or baseband images or audio signals.

The tuner 111 may include a plurality of tuners to receive broadcast signals of a plurality of channels. Alternatively, a single tuner capable of receiving broadcast signals of a plurality of channels simultaneously may be used.

The demodulator 112 may receive the digital IF signal (DIF) converted by the tuner 111 and perform a demodulation operation. After performing demodulation and channel decoding, the demodulator 112 may output a stream signal (TS). The stream signal may be a signal in which an image signal, an audio signal, or a data signal is multiplexed.

The stream signal output from the demodulator 112 may be input to the controller 180. After performing demultiplexing, image/audio signal processing, and the like, the controller 180 may output an image through the display module 150 and output sound through the audio output unit 160.

A sensing unit 120 refers to a device that senses changes within the display device 100 or external changes. For example, it may include at least one of a proximity sensor, an illumination sensor, a touch sensor, an infrared (IR) sensor, an ultrasonic sensor, an optical sensor (e.g., a camera), a sound sensor (e.g., a microphone), a battery gauge, or an environmental sensor (e.g., a hygrometer, a thermometer, etc.).

Based on the information collected from the sensing unit 120, the controller 180 may check the state of the display device 100 and control the device to maintain an optimal state by notifying a user when a problem occurs or by automatically adjusting the device.

In addition, the controller 180 may provide an optimal viewing environment by differently controlling content, image quality, size, and the like of images provided to the display module 150, depending on the viewer sensed by the sensing unit 120 or the illumination of the surrounding environment. As smart TVs evolve, the number of functions installed in the display device 100 increases, and the sensing units 120 also increase accordingly.

The input unit 130 may be arranged on one side of the body of the display device 100. For example, the input unit 130 may include a touch pad or a physical button. The input unit 130 may receive various user commands related to the operation of the display device 100 and deliver control signals corresponding to the input commands to the controller 180.

Recently, as the size of a bezel of the display device 100 has been reduced, many display devices 100 have adopted a minimized input unit 130 in the form of a physical button exposed to the outside. While having a minimum number of physical buttons disposed on the rear or side surface, the display device 100 may receive user inputs through a touch pad, a user input interface 173, which will be described later, or a remote control device 200.

The storage 140 may store programs for processing and control of each signal in the controller 180, or may store signal-processed image, audio, or data signals. For example, the storage 140 may store application programs designed to perform various tasks that can be processed by the controller 180 and selectively provide some of the stored application programs upon a request from the controller 180.

Programs to be stored in the storage 140 are not particularly limited as long as they can be executed by the controller 180. The storage 140 may also perform a function of temporarily storing image, audio, or data signals received from an external device through the external device interface 171. The storage 140 may store information about predetermined broadcast channels using a channel memory function such as a channel map.

While FIG. 1 illustrates an embodiment in which the storage 140 is provided separately from the controller 180, the present disclosure is not limited thereto. The storage 140 may be included in the controller 180.

The storage 140 may include at least one of a volatile memory (e.g., DRAM, SRAM, SDRAM, etc.) or a non-volatile memory (e.g., flash memory, hard disk drive (HDD), solid-state drive (SSD), etc.).

The display module 150 may generate a driving signal by converting the image signal, data signal, OSD signal, or control signal processed by the controller 180, or the image signal, data signal, or control signal received from the interface 171.

The display module 150 may be implemented as a flexible display and may also be implemented as a 3D display. The 3D display module 150 may be classified into a glasses-free type and a glasses-based type.

The display device 100 may include the display module 150, which occupies most of the area of the front surface of the device, and a case that covers the rear or side surface of the display module 150 and packages the display module 150.

The LCDs that were mainly used in the related art had difficulty emitting light on their own and therefore received light through a backlight unit. The backlight unit is a device that supplies light from a light source uniformly to liquid crystals positioned on the front side. As the backlight unit becomes thinner, a thin LCD may be implemented. However, it is difficult to implement the backlight unit using a bendable material. In addition, when the backlight unit is bent, it becomes difficult to supply light uniformly to the liquid crystals, resulting in variations in screen brightness.

In contrast, light emitting diodes (LEDs) or organic light emitting diodes (OLEDs) allow the display to be implemented in a flexible form because the individual elements that make up each pixel emit light on their own, and thus a backlight unit is not required. In addition, because each element is self-emissive, the brightness thereof is not affected even when the positional relationship thereof with neighboring elements changes, which allows the display module 150 to be implemented in a flexible form.

OLED emerged in earnest in the mid-2010s and has rapidly replaced LCDs in the small- and medium-sized display market. OLED is a display that uses the self-emissive phenomenon of fluorescent organic compounds, which emit light when current flows, and it provides faster quality response speed than LCDs, resulting in almost no afterimages when displaying moving images.

OLEDs are emissive display products that use three types of fluorescent organic compounds having self-emission functions, namely, red (R), green (G), and blue (B). In an OLED, electrons injected from the cathode and positively charged holes injected from the anode combine within the organic material to emit light. Therefore, the OLED does not require a backlight, which can degrade color quality.

The display module 150 may include a coupling magnet, a first power supply, and a first signal module.

One side of the display module 150 on which an image is displayed may be defined as a front or a front surface. The opposite side of the display module 150 on which the image cannot be observed when the image is displayed may be defined as a rear or a rear surface. The display module 150 may include a touch screen serving as an input device as well as an output device.

The audio output unit 160 receives a signal audio-processed by the controller 180 and outputs sound.

The interface 170 serves as a path between the display device 100 and various types of external devices connected to the display device. The interface 170 may include not only a wired method for transmitting and receiving data through a cable but also a wireless method using an antenna.

The interface 170 may include at least one of a wired/wireless headset port, an external charger port, a wired/wireless data port, a memory card port, a port to which a device having an identification module is connected, an audio input/output (I/O) port, a video I/O port, or an earphone port.

An example of the wireless method may include the broadcast receiver 110 described above, and the wireless signal may include not only a broadcast signal but also a mobile communication signal, a short-range communication signal, and a wireless Internet signal.

The external device interface 171 may transmit or receive data to and from an external device connected thereto. To this end, the external device interface 171 may include an A/V I/O unit (not shown).

The external device interface 171 may be connected to external devices such as a digital versatile disk (DVD), a Blu-ray device, a game console, a camera, a camcorder, a computer (laptop), and a set-top box in a wired/wireless manner, and may perform input/output operations with the external devices.

Also, the external device interface 171 may establish a communication network with various remote control devices 200 to receive control signals related to the operation of the display device 100 from the remote control devices 200 or to transmit data related to the operation of the display device 100 to the remote control devices 200.

The external device interface 171 may include a wireless communicator (not shown) for short-range wireless communication with other electronic devices. Through the wireless communicator (not shown), the external device interface 171 may exchange data with a nearby mobile terminal. In particular, in a mirroring mode, the external device interface 171 may receive device information, executed application information, and application images from the mobile terminal.

The network interface 172 may provide an interface for connecting the display device 100 to a wired/wireless network including the Internet network. For example, the network interface 172 may receive content or data provided by an Internet or content provider or a network operator over the network. The network interface 172 may include a communication module (not shown) for connection with the wired/wireless network.

The external device interface 171 and/or the network interface 172 may include a communication module for short-range communication such as Wi-Fi (Wireless Fidelity), Bluetooth, BLE (Bluetooth Low Energy), Zigbee, or NFC (Near Field Communication), and a communication module for cellular communication such as LTE (long-term evolution), LTE-A (LTE-Advanced), CDMA (code division multiple access), WCDMA (wideband CDMA), UMTS (universal mobile telecommunications system), or WiBro (Wireless Broadband).

The user input interface 173 may deliver a signal input by a user to the controller 180, or deliver a signal from the controller 180 to the user. For example, the user input interface 173 may transmit/receive user input signals for power on/off, channel selection, or screen settings from the remote control device 200, may deliver user input signals input through local keys (not shown) such as a power key, channel key, volume key, or setting key to the controller 180, may deliver user input signals input through a sensor unit (not shown) that senses a gesture of the user to the controller 180, or may transmit a signal from the controller 180 to the sensor unit.

The controller 180 may include at least one processor, and may control overall operations of the display device 100 using the processor. Here, the processor may be a general processor such as a central processing unit (CPU). Of course, the processor may be a dedicated device such as an ASIC or another hardware-based processor.

The controller 180 may demultiplex a stream input through the tuner 111, the demodulator 112, the external device interface 171, or the network interface 172, or may process demultiplexed signals to generate and output a signal for image or audio output.

The image signal processed by the controller 180 may be input to the display module 150 to display an image corresponding to the image signal. Also, the image signal processed by the controller 180 may be input to an external output device through the external device interface 171.

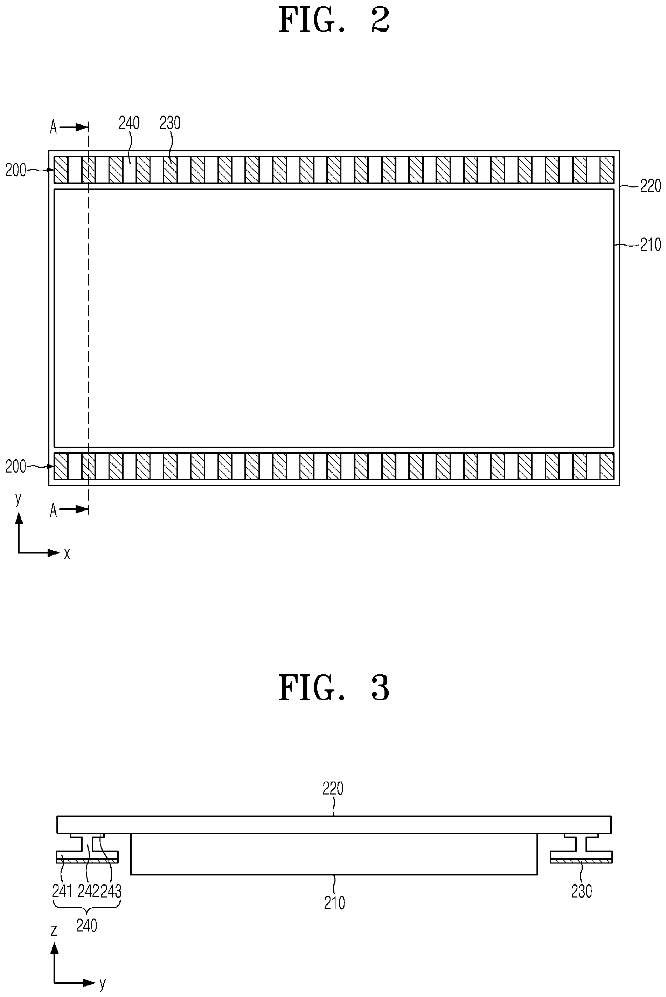

Sound corresponding to the audio signal processed by the controller 180 may be output through the audio output unit 160. Furthermore, the audio signal processed by the controller 180 may be input to an external output device through the external device interface 171. Although not shown in FIG. 2, the controller 180 may include a demultiplexer and an image processor.

In addition, the controller 180 may control overall operations within the display device 100. For example, the controller 180 may control the tuner 111 to select (tune) a broadcast corresponding to a channel selected by the user or a pre-stored channel.

The controller 180 may also control the display device 100 according to a user command received through the user input interface 173 or according to an internal program. The controller 180 may control the display module 150 to display an image. The image displayed on the display module 150 may be a still image or a moving image, and may be a 2D image or a 3D image.

The controller 180 may cause a predetermined 2D object to be displayed within the image displayed on the display module 150. For example, the object may include at least one of a screen image (newspaper, magazine, etc.) on a connected web, an electronic program guide (EPG), various menus, a widget, an icon, a still image, a moving image, or a text.

The controller 180 may modulate and/or demodulate a signal using an amplitude shift keying (ASK) scheme. Here, the ASK scheme refers to a method of modulating a signal by changing the amplitude of a carrier wave based on data values or restoring digital data values from an analog signal according to the amplitude of the carrier wave.

For example, the controller 180 may modulate an image signal using the ASK scheme and transmit the modulated image through a wireless communication module.

For example, the controller 180 may demodulate and process an image signal received through the wireless communication module, using the ASK scheme.

Thus, the display device 100 may easily transmit and receive signals to and from another image display device placed nearby without using complex communication protocols such as a MAC address (Media Access Control Address) or TCP/IP.

The display device 100 may further include an image capturer (not shown). The image capturer may capture an image of the user. The image capturer may be implemented with one camera, but the present disclosure is not limited thereto. The image capturer may be implemented with a plurality of cameras. The image capturer may be embedded in the display device 100 on an upper portion of the display module 150 or may be separately provided. The image information captured by the image capturer may be input to the controller 180.

The controller 180 may recognize the user's position based on the image captured by the image capturer. For example, the controller 180 may determine a distance (the z-axis coordinate) of the user from the display device 100. In addition, the controller 180 may determine the x-axis and y-axis coordinates on the display module 150 corresponding to the user's position.

The controller 180 may sense the gesture of the user based on each of the image captured by the image capturer, the sensed signal from the sensor unit, or a combination thereof.

The power supply 190 may supply power throughout the display device 100. In particular, the power supply 190 may supply power to the controller 180, which may be implemented in the form of a System on Chip (SoC), the display module 150 for displaying images, and the audio output unit 160 for audio output.

Specifically, the power supply 190 may include a converter (not shown) configured to convert AC power into DC power and a DC/DC converter (not shown) configured to convert a level of the DC power.

The power supply 190 serves to receive power from an external source and distribute the power to each component. The power supply 190 may be directed connected to an external power source to supply AC power, or may include a rechargeable battery.

In the former case, a cable is connected, and thus the mobility or the range of movement of the power supply is restricted. In the latter case, movement is not restricted, but the weight and volume of the power supply increase as much as the battery, and the power supply is required to be directly connected to a power cable or to be coupled to a charging cradle (not shown) for charging for a certain time.

The charging cradle may be connected to the display device through a terminal exposed to the outside, or may wirelessly charge the built-in battery when positioned in proximity.

The remote control device 200 may transmit a user input to the user input interface 173. To this end, the remote control device 200 may use a scheme such as Bluetooth, radio frequency (RF) communication, infrared communication, ultra-wideband (UWB), or Zigbee. Additionally, the remote control device 200 may receive image, audio, or data signals output from the user input interface 173 and may display the same on the remote control device 200 or output sound.

The display device 100 described above may be a stationary or mobile digital broadcast receiver capable of receiving digital broadcast signals.

The block diagram of the display device 100 shown in FIG. 1 is merely an example for describing one embodiment of the present disclosure. Components shown in the block diagram may be integrated, components may be added, or some components may be omitted, depending on the specifications of the display device 100 that is actually implemented.

That is, two or more components may be combined into a single component, or one component may be subdivided into two or more components, as necessary. The functions performed by each block are merely for describing the embodiment of the present disclosure, and the present disclosure is not limited to specific operations or devices.

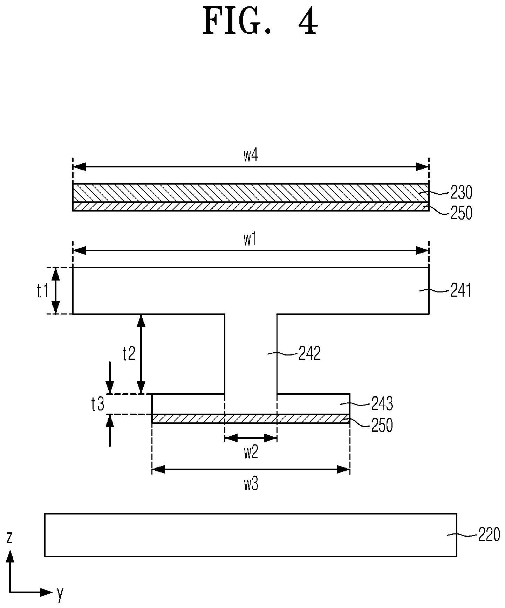

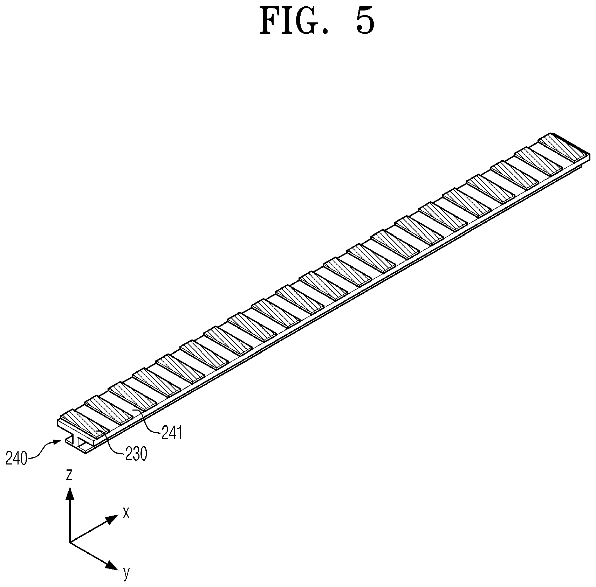

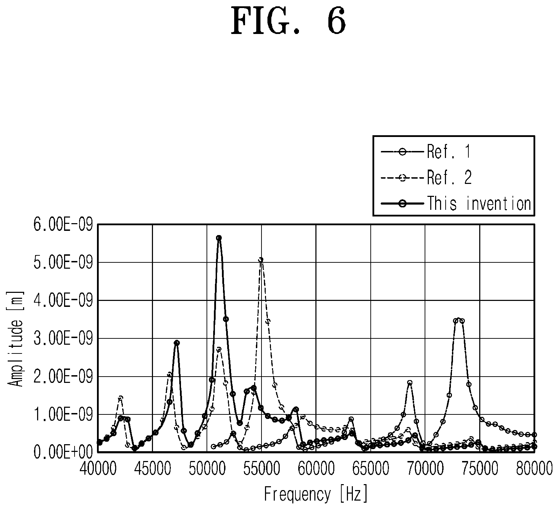

FIG. 2 is a view illustrating a haptic actuator 200 disposed on a rear surface of a cover glass 220 according to an embodiment of the present disclosure. FIG. 3 is a cross-sectional view taken along line A-A of FIG. 2. FIG. 4 is an exploded view of the haptic actuator 200 according to an embodiment of the present disclosure. FIG. 5 is a perspective view of the haptic actuator 200 according to an embodiment of the present disclosure. FIG. 6 depicts the effects of the haptic actuator 200 according to an embodiment of the present disclosure.

In the following description of the haptic actuator 200 according to an embodiment of the present disclosure, a left-right direction refers to an x-axis direction, an up-down direction refers to a y-axis direction, and a front-rear direction refers to a z-axis direction.

The haptic actuator 200 according to the embodiment of the present disclosure may be disposed on the rear surface of the cover glass 220 covering a display panel 210, and may include a piezoelectric element 230 and an amplification member 240.

The piezoelectric element 230 may be driven to generate vibration. The piezoelectric element 230 may be attached to a rear surface of the amplification member 240. The amplification member 240 may serve to amplify the vibration generated by driving the piezoelectric element 230 and transmit the amplified vibration to the cover glass 220. Here, the display panel 210 may include a liquid crystal display (LCD) panel.

The LCD panel cannot easily emit light on its own, and thus it is supplied with light through a backlight unit. The backlight unit is a device that supplies light, supplied from a light source, uniformly to the liquid crystals positioned at the front. As backlight units become increasingly thinner, slim LCD panels may be implemented.

Here, in the case of the LCD panel, in order to implement haptic feedback, the piezoelectric element 230 may be disposed at the bezel portion, that is, at the edge portion of the rear surface of the cover glass 220, as shown in FIG. 2. This is because an air layer is present between the stacked layers of the LCD panel, and thus disposing the piezoelectric element 230 on the rear surface of the LCD panel may lower the efficiency of vibration transmission.

Therefore, as shown in FIGS. 2 and 5, the amplification member 240 of the haptic actuator 200 according to the embodiment of the present disclosure may be extended in the longitudinal direction (x-axis direction), and may include a plurality of amplification members spaced apart from the rear surface of the display panel 210 and attached to the edge portion of the rear surface of the cover glass 220.

Also, as described above, vibration that can be generated by the piezoelectric element 230 is limited by the material of the element, the shape of the element, or the magnitude of a voltage applied thereto, and accordingly it is necessary to amplify the vibration transmitted to the display panel 210 to improve the haptic effect.

Referring to FIGS. 3 and 4, according to an embodiment of the present disclosure, the amplification member 240 of the haptic actuator 200 may include a head 241, a first support 242, and a second support 243. The piezoelectric element 230 may be attached to the head 241. The first support 242 may be erected at a center portion of the head 241 and formed to have a width w2 less than a width w1 of the head 241. The first support 242 may also be erected at the center portion of the second support 243, which may be formed to have a width w3 greater than the width w2 of the first support 242, and may be attached to the rear surface of the cover glass 220.

Thus, in the haptic actuator 200 according to the embodiment of the present disclosure, the amplification member 240 may amplify vibration transmitted in the vertical direction (z-axis direction) to the display panel 210 through the first support 242 erected at the center portion of the head 241, to which the piezoelectric element 230 is attached. Thus, the haptic effect may be improved by the vibration transmitted to the display panel 210 in both the horizontal direction (x-axis or y-axis direction) and the vertical direction (z-axis direction).

However, the width w2 of the first support 242 is inevitably set to be less than the width w1 of the head 241 to amplify vibration. Such width may be unfavorable to attaching the first support 242, which serves to amplify the vibration, to the rear surface of the display panel 210.

Accordingly, in the haptic actuator 200 according to the embodiment of the present disclosure, the amplification member 240 may include the second support 243 formed to have a width greater than the width w2 of the first support 242 and attached to the rear surface of the cover glass 220. That is, the amplification member 240 may improve the haptic effect by amplifying vibration generated by the piezoelectric element 230 through the first support 242, while enhancing attachment of the amplification member 240 to the cover glass 220 using the second support 243.

In addition, the width w2 of the first support 242 of the amplification member 240 may be less than or equal to half a wavelength of the vibration generated by the piezoelectric element 230. Reducing the width w2 of the first support 242 erected at the center portion of the head 241 as described above may be favorable to amplification of the vibration transmitted in the z-axis direction to the cover glass 220.

Therefore, in the amplification member 240 according to the embodiment of the present disclosure, the width w2 of the first support 242 may be set to be less than or equal to half the wavelength of the vibration generated by the piezoelectric element 230. For example, in order to achieve a resonant frequency of about 60 kHz by driving the piezoelectric element 230, the width w2 of the first support 242 may be set to be about 6 mm, which is half the wavelength of the vibration.

Furthermore, in the amplification member 240 according to the embodiment of the present disclosure, the width w4 of the piezoelectric element 230 may be equal to the width w1 of the head 241. In this case, the width w2 of the first support 242 may be greater than or equal to one-tenth of the width w4 of the piezoelectric element 230. Here, the width w1 of the head 241 may be less than or equal to a perpendicular distance between an edge of the display panel 210 and an edge of the cover glass 220, i.e., a width corresponds to the bezel portion as described earlier with reference to FIG. 2.

Increasing the width w4 of the piezoelectric element 230 is favorable to transmitting vibration. However, as the haptic actuator 200 is positioned in the bezel portion as described above, the width w1 of the head 241 may be set to be less than or equal to the width of the bezel portion. And the width w4 of the piezoelectric element 230 may be equal to the width w1 of the head 241.

Reducing the width w2 of the first support 242 is favorable to amplifying vibration, but may degrade attachment to the rear surface of the cover glass 220. Therefore, it is necessary to secure structural stability of the amplification member 240. Therefore, in the haptic actuator 200 according to the embodiment of the present disclosure, the width w2 of the first support 242 may be set to be greater than or equal to one-tenth of the width w4 of the piezoelectric element 230.

Additionally, in the haptic actuator 200 according to the embodiment of the present disclosure, the width w3 of the second support 243 may be set to be less than the width w1 of the head 241. That is, the width w3 of the second support 243 may be set to be greater than the width w2 of the first support 242 and less than the width w1 of the head 241.

This is intended to secure the adhesive force by which the amplification member 240 is attached to the cover glass 220, and at the same time to efficiently transmit the amplified vibration to the cover glass 220 through the amplification member 240.

Here, FIG. 6 depicts the effects obtained through the amplification member 240 in the haptic actuator 200 according to an embodiment of the present disclosure, and shows experimental data for explaining the effects obtained according to variation of the width w2 of the first support 242 and the presence or absence of the second support 243.

Reference 1 (Ref. 1) corresponds to a case where the width w2 of the first support 242 is 4 mm and the first support is attached to the rear surface of the cover glass 220. Reference 2 (Ref. 2) corresponds to a case where the width w2 of the first support 242 is 2 mm and the first support is attached to the rear surface of the cover glass 220. "This invention" represents an embodiment in which the width w2 of the first support 242 is 2 mm and the width w3 of the second support 243 is 4 mm, and the second support 243 is attached to the rear surface of the cover glass 220.

As a result of comparing the data of Ref. 1 and Ref. 2, it was confirmed that as the width w2 of the first support 242 decreases, the amplitude of the vibration transmitted to the cover glass 220 increases.

That is, as described above, it was confirmed that the haptic effect can be enhanced by amplifying the vibration transmitted in the vertical direction (z-axis direction) to the cover glass 220 through the first support 242, which is erected on the cover glass 220.

Moreover, as a result of comparing the data of Ref. 2 with the data of "This invention," it was confirmed that when the second support 243 is formed and attached to the rear surface of the cover glass 220, the amplitude of the vibration transmitted to the cover glass 220 increases.

That is, it was confirmed that increasing the adhesive force by which the second support 243 is attached to the cover glass 220 enables the vibration amplified through the first support 242 to be efficiently transmitted to the cover glass 220. Thus, increasing the adhesive force may improve the haptic effect.

In addition, in the haptic actuator 200 according to the embodiment of the present disclosure, the thickness t1 of the head 241, the thickness t2 of the first support 242, and the thickness t3 of the second support 243 may each be greater than or equal to 0.5 mm and may be less than or equal to half the wavelength of the vibration generated by the piezoelectric element 230.

This is intended to design a minimum thickness that secures the structural stability of the amplification member 240. If the amplification member 240 is excessively thick, the vibration generated by driving the piezoelectric element 230 may be attenuated while being transmitted to the cover glass 220. Therefore, the configuration is intended to design a maximum thickness that allows the amplified vibration to be transmitted to the cover glass 220.

Furthermore, in the haptic actuator 200 according to the embodiment of the present disclosure, the thickness t3 of the second support 243 may be less than the thickness t1 of the head 241 or the thickness t2 of the first support 242. Decreasing the thickness t3 of the second support 243 may relatively increase the thickness t2 of the first support 242, thereby allowing the vibration transmitted to the cover glass 220 to be further amplified.

Referring again to FIGS. 2 and 5, in the haptic actuator 200 according to the embodiment of the present disclosure, the amplification member 240 may extend in the longitudinal direction (the x-axis direction), and include a plurality of amplification members spaced apart from the rear surface of the display panel 210 and attached to the edge portion of the rear surface of the cover glass 220. A plurality of piezoelectric elements 230 may be spaced apart from one another and attached to the head 241. The amplification member 240 may amplify vibration generated by driving the plurality of piezoelectric elements 230 and transmit the amplified vibration to the cover glass 220, thereby improving the haptic effect.

Additionally, in the haptic actuator 200 according to an embodiment of the present disclosure, the amplification member 240 may include a metallic material or a plastic material. This is because the stiffness or elastic modulus of the amplification member 240 is associated with the amplification of vibration.

That is, increasing the stiffness or elastic modulus of the amplification member 240 may be favorable to amplifying vibration. In an embodiment of the present disclosure, the metallic material may include an aluminum material having high stiffness. Furthermore, since the haptic actuator 200 according to the embodiment of the present disclosure may amplify vibration generated by the piezoelectric element 230 through the amplification member 240, materials having stiffness or elasticity other than the metallic material or plastic material may also be used.

According to an embodiment of the present disclosure, the haptic actuator 200 may further include an adhesive member 250 to attach the piezoelectric element 230 to the head 241 of the amplification member 240 and attach the second support 243 to the rear surface of the cover glass 220.

In an embodiment, the stiffness of the adhesive member 250 may be greater than or equal to 3 GPa to amplify vibration. Additionally, the adhesive member 250 may have a thickness t greater than or equal to 100 µm and less than or equal to 250 µm, and be applied between the piezoelectric element 230 and the head 241 and between the second support 243 and the rear surface of the cover glass 220.

In addition, in the haptic actuator 200 according to an embodiment of the present disclosure, the width w3 of the second support 243 or the thickness t3 of the second support 243 may be designed based on specifications such as the stiffness of the adhesive member 250, thereby enhancing the attachment to the cover glass 220 while efficiently transmitting the amplified vibration to the cover glass 220.

Furthermore, regarding the haptic actuator 200 according to an embodiment of the present disclosure, the display panel 210 may include a flexible display panel 210. In addition, the cover glass 220 may be bent to have a predetermined radius of curvature. That is, the cover glass 220 may be formed in a shape corresponding to the flexible display panel 210 to cover the flexible display panel 210.

In this case, the second support 243 of the amplification member 240 may be bent to have the same radius of curvature as the cover glass 220. Accordingly, by forming the cover glass 220 and the second support 243 to correspond to various shapes of the display panel 210, the haptic actuator 200 according to the embodiment of the present disclosure may enhance the haptic effect by amplifying vibration generated by driving the piezoelectric element 230.

In summary, the haptic actuator according to the present disclosure may include an amplification member arranged to amplify vibration generated by driving the piezoelectric element and transmit the amplified vibration to the cover glass covering the display panel. In addition, vibration transmitted in a vertical direction to the rear surface of the cover glass may be amplified through the amplification member, and the amplification member may be stably disposed within the cover glass.

The above detailed description is to be construed in all aspects as illustrative and not restrictive. The scope of the present disclosure should be determined by reasonable interpretation of the appended claims and all changes coming within the equivalency range of the present disclosure are intended to be embraced in the scope of the present disclosure.

## Claims

1. A haptic actuator disposed on a rear surface of a cover glass covering a display panel, the haptic actuator comprising:
a piezoelectric element driven to generate vibration; and
an amplification member having a rear surface allowing the piezoelectric element to be attached thereto, the amplification member being arranged to amplify the vibration generated by driving the piezoelectric element and transmit the amplified vibration to the cover glass,
wherein the amplification member comprises:
a head, the piezoelectric element being attached to the head;
a first support having a width less than a width of the head and erected at a center portion of the head; and
a second support having a width greater than the width of the first support, the second support being attached to the rear surface of the cover glass,
wherein the first support is erected at a center portion of the second support.

2. The haptic actuator of claim 1, wherein the width of the first support is less than or equal to half a wavelength of the vibration generated by the piezoelectric element.

3. The haptic actuator of claim 1, wherein the piezoelectric element has a width equal to the width of the head,
wherein the width of the first support is greater than or equal to one-tenth of the width of the piezoelectric element.

4. The haptic actuator of claim 3, wherein the width of the head is less than or equal to a perpendicular distance between an edge of the display panel and an edge of the cover glass.

5. The haptic actuator of claim 1, wherein the width of the second support is less than the width of the head.

6. The haptic actuator of claim 1, wherein each of the head, the first support, and the second support has a thicknesses greater than or equal to 0.5 millimeters and less than or equal to half a wavelength of the vibration generated by the piezoelectric element.

7. The haptic actuator of claim 6, wherein the thickness of the second support is less than the thickness of the head or the first support.

8. The haptic actuator of claim 1, wherein the amplification member is formed to extend in a longitudinal direction,
wherein the amplification member comprises a plurality of amplification members spaced apart from the display panel and attached to an edge portion of the rear surface of the cover glass.

9. The haptic actuator of claim 8, wherein the piezoelectric element comprises a plurality of piezoelectric elements spaced apart from one another and attached to the head.

10. The haptic actuator of claim 1, wherein the amplification member comprises a metallic material or a plastic material.

11. The haptic actuator of claim 1, further comprising:
an adhesive member arranged to attach the piezoelectric element to the head and to attach the second support to the rear surface of the cover glass.

12. The haptic actuator of claim 1, wherein the display panel comprises a flexible display panel,
wherein the cover glass is bent to have a predetermined radius of curvature,
wherein the second support is bent to have a radius of curvature equal to the radius of curvature of the cover glass.

13. The haptic actuator of claim 1, wherein the display panel comprises a liquid crystal display (LCD) panel.
